# EUROPEAN PATENT APPLICATION

(11) **EP 0 663 372 A1**
(43) Date of publication of application: **19.07.1995**
(21) Application number: 95200042.0
(22) Date of filing: 10.01.1995
(51) Int. Cl.: C03B 19/10, B22F 1/00, C02F 11/00, B09B 5/00, E02F 5/24, E02D 3/00

(54) **Process and system for the treatment of contaminated particulate material**

(30) Priority: 12.01.1994 NL 9400049
(71) Applicant: VAN RIJN INDUSTRIELE PROJEKTEN B.V., NL-4819 AA Breda (NL)
(72) Inventor: Van Rijn, Nicolaas Johannes Petrus, NL-4561 HN Hulst (NL)
(74) Representative: de Bruijn, Leendert C.

(57) **Abstract**

For the purpose of treating contaminated particulate material, in particular harbour mud, oil-containing mud or chemically contaminated soil, the particulate material having a dry substance content of at least 70 % is introduced into a circulating fluidized-bed reactor in which the material is subjected to a temperature of at least 900°C, preferably approximately 950°C. After optional addition of a flux, the silicates are formed into glass particles in which heavy metals are encapsulated. Said glass particles are passed, together with the flue gases, to a cyclone which separates the flue gases from the solid particles. Preferably, the solid particles separated from the cyclone are recycled to the circulating fluidized-bed reactor, and the thermal treatment and separation is repeated a number of times, after which the solid particles are finally discharged to a depot.

## Description

In the first instance, the invention relates to a process for treating contaminated particulate material, in particular harbour mud, oil-containing mud and chemically contaminated soil, and sludge from water treatment installations.

In order to make navigational channels of waterways navigable, it is not uncommon to carry out dredging activities. The dredgings are usually not permitted to be dumped on land or at sea, because, owing to contamination, various types of hazardous contaminants have accumulated in the dredgings, in particular heavy metals, polycyclic aromatic hydrocarbons (PAHs), cyanide, chlorinated hydrocarbons (PCBs) and the like. Indeed, these dredgings are regarded as chemical waste and are stored in dumping sites which are made safe in such a way that pollutant streams cannot spread over the land. It will be evident that said storage constitutes an expensive and only temporary solution. In future, such quantities of dredgings are expected that storage becomes infeasible.

The most important objective of the invention is to overcome this problem and to provide a treatment process which results in a material which can be reused and from which no noxious substances can be released.

According to the invention, the process mentioned in the preamble to this end is characterized in that a quantity of particulate material to be treated having a dry substance content > 70 % is introduced into a thermal reactor in which the material is subjected to such a temperature of at least 900°C that the silicates - after the optional addition of a flux - are formed into small glass particles in which heavy metals are encapsulated. The glass particles and the silicates not yet formed into glass, together with the flue gases, are passed to a cyclone which separates the flue gases from the solid particles.

Preferably, a circulating fluidized-bed reactor is employed.

An essential aspect of the invention is that the heavier hydrocarbons, PAHs, cyanide, PCBs and the like are incinerated, while the heavy metals are immobilized in the glass particles. The ash consisting of glass particles contains heavy metals, but these cannot be leached. These glass particles can be put to use, for example as a filler material in building products and road construction.

Often a single thermal treatment will be insufficient to ensure complete combustion of the hydrocarbons and complete encapsulation of heavy metals in glass particles. Therefore, the solid particulate material separated from the cyclone will be recycled to the reactor and the thermal treatment and separation will be repeated a number of times, the solid particles being finally discharged to a depot. Normally, the material is recycled for a period of time.

At the outlet of the circulating fluidized-bed reactor the particles can be cooled in order to achieve rapid solidification of the glass.

A system enabling the abovementioned process to be carried out comprises a thermal reactor, preferably of the circulating fluidized bed type, means for heating the contents of the reactor, a line for supplying particulate material to be treated to the circulating fluidized-bed reactor, a line for discharging flue gases and material treated in the circulating fluidized-bed reactor, which line debouches into a cyclone for separating flue gases and solid particles from one another, a line for discharging flue gases from said cyclone, and a line for removing solid particles from the cyclone.

In order to permit temporary recirculation of the particulate material, switching means may be present in the line in which the particulate material is discharged from the cyclone. Said switching means are designed in order either to recycle the solid particulate material to the circulating fluidized-bed reactor or to discharge it to a depot.

The very fine particles can be removed from the flue gases by fitting an electrostatic filter and/or dust filters for intercepting small particles in the flue gas discharge line.

In order to achieve a dry substance content > 70 % by weight, drying of the material is often necessary, before it is passed to the circulating fluidized-bed reactor. According to the invention, said drying takes place on a belt drier and the dried material is ground into powder and is passed to a buffer silo whose outlet communicates with the circulating fluidized-bed reactor via an air line.

A belt drier suitable for carrying out this drying method comprises an endless conveyor belt, means for passing particulate material, for example in granular form, onto the conveyor belt, means for directing hot air across the top surface of the top part of the belt, and means for conductively heating the top part of the belt from underneath by means of hot oil. A belt drier functions much more efficiently than a rotary drier.

Preferably, the means for directing hot air across the top surface of the top part of the belt consist of a number of units which are positioned above the belt next to one another and are each formed by a fan, an air supply connected to the intake of the fan, an air outlet connected to the outlet of the fan, a method for heating the air in said outlet and a blow-through element for directing the heated air across the belt, a sink for the air which has flowed across the belt and a condenser which is connected to said sink and is in turn connected to said air supply.

The means for conductively heating the top part of the belt from underneath by means of hot oil consist of oil-filled contact boxes which are disposed directly below the bottom surface of the top part and are connected to an oil supply line and an oil discharge line.

In the case of material which has a very low dry substance content, for example harbour mud having a dry substance content of approximately 6 %, it is advisable, because of the energy costs of drying, to carry out mechanical dewatering before the material is placed onto the belt drier. Said mechanical dewatering is carried out with the aid of, for example, a vacuum filter drum or a belt filter press or a chamber filter press. The dry substance content is increased to 25-45 % by weight.

The invention will now be explained in more detail with reference to the figures.

Figure 1 shows a flow sheet of a process according to the invention.

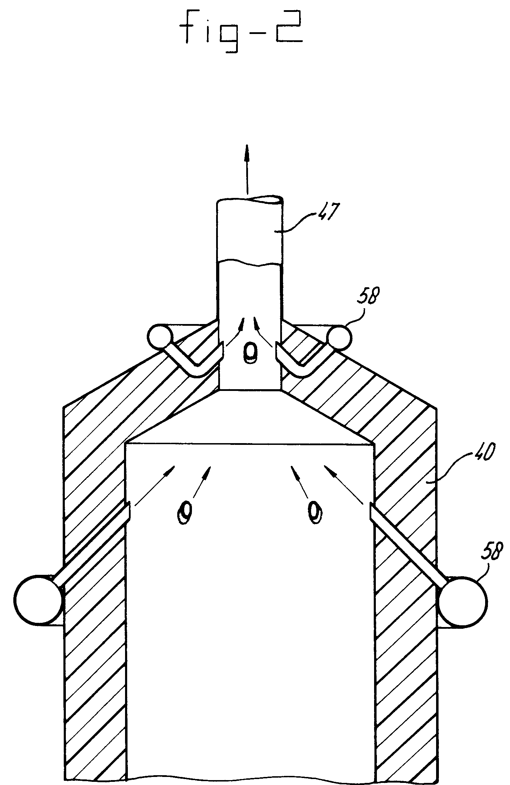

Figure 2 shows the principle of cooling of flue gases and particulate material at the top in the circulating fluidized-bed reactor.

Figure 3 shows a top view of the belt drier described.

Figure 4 shows a side view of the belt drier according to Figure 3.

The flow sheet depicted shows the following process:

Contaminated particulate material having a low dry substance content (for example approximately 6 % by weight), for example harbour mud, is passed from a supply 1 by means of a line 2 via pump 3 to a mechanical dewatering appliance 4. The latter may consist, inter alia, of a vacuum filter drum, a belt filter press and a chamber filter press. In the line, a flocculant can be fed in. The dry substance content is increased in the mechanical dewatering appliance up to a percentage by weight between 25 and 45 (depending on the type of mud). The separated water runs through the line 5 to a storage tank 6 with aeration.

The particulate material which has been separated in the appliance 4, for example in the form of a cake, is passed via line 7 to a granulator 8. The granules formed in the granulator are passed, via line 9, to a belt drier 10 for drying the granules to a dry substance content of at least 70 % by weight.

The water vapour formed above the belt drier 10 flows, together with the air, via the line 11 to a condenser 12 which is cooled with cooling water which is supplied through the line 13 from a supply 14. The cooling water discharge line is indicated by 15.

The discharge 16 of the condenser contains air and condensate water. Condensate water is discharged, by means of a line 17 which branches off from the underside of the line 16, to a buffer tank 18 which can drain via a line 19 and a pump 20 to a storage tank 6 for waste water.

The air line 16 further splits into air lines 21 and 22, of which the first 21 debouches into an air supply line 24 which extends from an air source 23 and runs to a heat exchanger 25, where the air is heated which is passed to the belt drier 10 via the line 26.

In the heat exchanger 25, the air is subjected to heat exchange with hot oil which comes from a thermal oil unit 27. Between the unit 27 and the heat exchanger 25 run lines 28 and 28' for this purpose, which take care of the oil circulation. The unit 27 is fired with gas from the gas source 29.

The material dried on the belt 10 and having a dry substance content > 70 % by weight flows via the line 30 or by means of a conveyor belt to a mill 31 (for example a pin mill) where it is ground into particles and via a line 34 is conveyed to a buffer silo 35. The outlet of said buffer silo and the outlet of a silo 36 for adjuvants (for example fluxes) debouch into a line 37 which is connected to an air source 38. Said line 37 passes the substances from the silos 35 and 36 to a circulating fluidized-bed reactor 40 in which the material is brought to a temperature of at least 900°C, preferably approximately 950°C, by means of a burner 41 which is fed with gas which flows in via the line 42 from a source 43, and optionally additional combustion air which is supplied via line 44 from a source 45.

The air line 22 and the line 46, which extends from the tanks 6 and 18, for contaminated air debouch into the line 37, so that contaminants present in the air are incinerated in the circulating fluidized-bed reactor 40.

In the circulating fluidized-bed reactor, incineration takes place of heavier hydrocarbons, polycyclic aromatic hydrocarbons, cyanide, chlorinated hydrocarbons and other combustible contaminants, while the silicates are fused and formed into mainly spherical glass particles, heavy metals being encapsulated in the particles. Near the outlet of the reactor 40, cooling means may be disposed. The discharge line 47 of the reactor 40 conveys flue gases and glass particles to a cyclone 48, where the solid particles are separated from the gas. The flue gas flows via the line 49 to an electrostatic filter 50 and/or dust filters, while the solid fraction flows through the line 51 to a swing valve 52 which either lets the material through to a recirculation line 53 which debouches into the reactor 40 or lets it through to a discharge line 54 which runs to a storage silo 55 whence the material can be passed via the line 56 to a reuse or processing installation 57.

At the top of the circulating fluidized-bed reactor, cold air is injected via line 58, coming from compressed-air source 59, in order to cool the flue gases and the particles, so that glass is no longer being formed. At the same time, the glass beads thereby attain a low viscosity, so that agglomeration in the line 47 and in the cyclone 48 is prevented.

The line 51 has a compressed-air line 58 debouching into it, which extends from a compressed-air source 59, in order to convey the solid particles to the circulating fluidized-bed reactor 40 or to storage silo 55.

The silo 36 communicates, via a line 60, with an adjuvant store 61.

The water in the tank 6 can be passed to a waste water treatment plant 63 via a line 62.

The particles intercepted in the electrostatic filter 50 flow into the mill 31 via a line 64.

An essential feature of the invention is that the heavy metals are immobilized in glass beads. Causing the thermal treatments to take place a number of times, via recirculation, achieves the required residence time for immobilization and incineration. The treatment is batchwise. Once the residence time has elapsed, the swing valve 52 is switched over, so that the product flows to the silo 55. When the circulating fluidized-bed reactor is empty, the valve 52 is returned into its original state, and a fresh quantity of dried ground mud is injected into the circulating fluidized-bed reactor 40.

With the aid of the process described it is possible for heavily contaminated mud and soil to be treated effectively and it is not necesary to resort to storage in enclosed and secured dumping sites.

If the contaminated soil contains relatively little water, the mechanical dewatering treatment and sometimes even the drying treatment on belt 10 can be dispensed with. Thus, for processing of oil-containing mud, the drying on the belt 10 and a thermal treatment in the circulating fluidized-bed reactor 40 are sufficient. To process relatively clean mud from water treatment installations it would be sufficient to apply mechanical dewatering and drying on the belt 10.

The flue gases of the circulating fluidized-bed reactor could be used, after cleaning in the filter 50, for heating the air to be guided over the belt drier 10. This heating can take place in the heat exchanger 25. In that case, the unit 27 might not be necessary or not always be necessary.

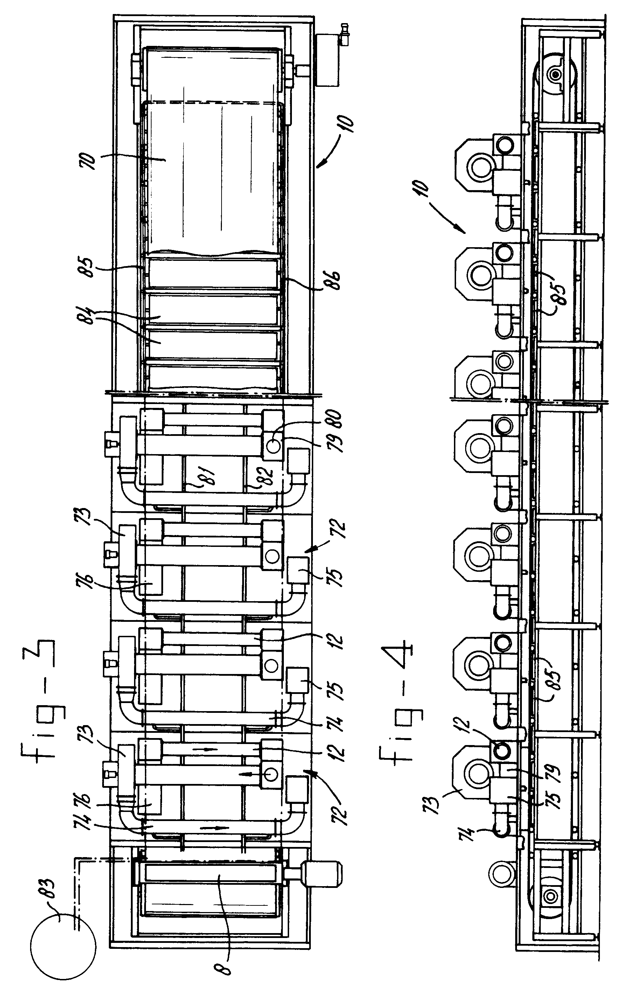

The belt drier 10 depicted in Figures 3 and 4 comprises a conveyor belt 70, made of stainless steel, plastic or carbon steel, which is supported on rollers. Above the feed section of the belt a granulator 8 is positioned in which the mechanically dewatered material having a dry substance content of approximately 35 % by weight is made into granules and is deposited on the drying belt 70. Above the top part of the drying belt a number of units 72 are disposed which are positioned next to one another, in the longitudinal direction of the belt, and which are able to blow warm air over the granular material lying on the belt. Each unit 72 consists of a fan 73 to which a heat exchanger 74 is connected, whose warm air discharge 75 debouches above the top part of the drying belt 70. The warm air sweeping across the granular material absorbs the moisture from the material lying on the drying belt and flows via an exhaust box 76 to a condenser 12 which is connected, via an inlet 79 which also has a supply orifice 80 for fresh air, to the intake side of the fan 73.

In the heat exchanger, air is brought to a temperature of at most 250°C by means of heated oil. Said oil is supplied and discharged by pipes 81 and 82 which communicate with a gas-fired boiler 83 in which the oil is heated.

Underneath the top part of the drying belt, contact bodies 84 are positioned in the form of boxes, and hot oil is supplied and discharged via the oil lines 85 and 86. These lines likewise run to the boiler 83. With the aid of the contact boxes 84 containing oil of approximately 320°C, the drying belt 70 is brought to a relatively high temperature.

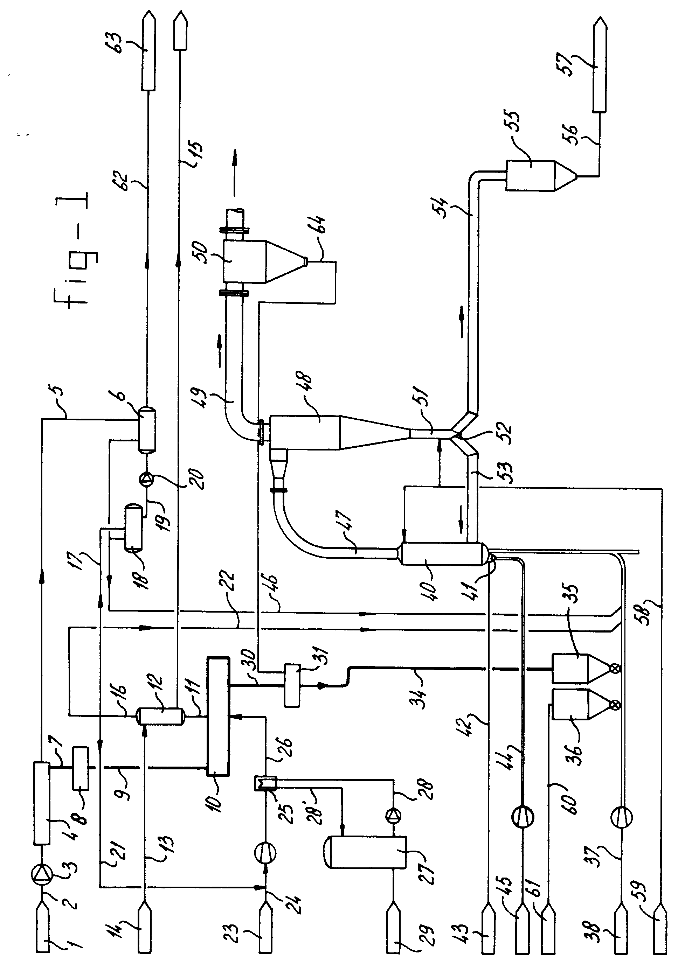

The air which flows into the box 76 contains a high percentage of water vapour and other volatile substances and has in the meantime been cooled to a temperature of approximately 110°C. In the condenser 12, further cooling takes place to approximately 70°C. The condensed water vapour and condensed volatile substances are collected in a tank and are pumped to the waste water tank 6. As can be seen from the flow sheet of Figure 1, the venting arrangement of tanks 6 and 18 is connected to the incineration air line of the reactor 40, so that noxious and odorous substances can be incinerated in the circulating fluidized-bed reactor.

The fact that each section 72 above the belt 70 is independent makes it possible to achieve great flexibility in the drying conditions. The number of sections 72 depends on the capacity, the drying time and the type of the material to be dried.

The condenser 12 is cooled with water of approximately 10°C, and the temperature of the cooling water rises in the condenser to approximately 30°C.

Via the hole 80, approximately 33 % of fresh air is supplied, the remainder being recirculated air.

In the pin mill 31, the dried mud is processed into powder having a mean size of 50 µm.

The process described is suitable for treating contaminated particulate material, in particular harbour mud, oil-containing mud, chemically contaminated soil and the like. The following metals can, inter alia, be encapsulated in the glass beads: chromium, cobalt, nickel, copper, zinc, arsenic, molybdenum, tin, barium and lead. Cadmium and mercury are removed in the flue gas purification installation by means of activated carbon. Polycyclic aromatic hydrocarbons, chlorinated hydrocarbons and other contaminants such as mineral oil can be incinerated. To promote flocculation of the mud before it is dewatered mechanically, it is possible to add iron chloride or calcium hydroxide or polyelectrolyte. Mechanical dewatering is enhanced by flocculation.

Within the scope of the invention modifications and variations are possible. If the particulate material to be treated contains much organic material, the combustion in the reactor 40 may be self-sustaining; starting the combustion in the reactor does require a burner.

## Claims

1. Process for treating contaminated particulate material, in particular harbour mud, oil-containing mud and chemically contaminated soil, characterized in that a quantity of particulate material to be treated having a dry substance content > 70 % is introduced into a thermal reactor in which the material is subjected to such a temperature of at least 900°C that the silicates - after the optional addition of a flux - are formed into small glass particles in which heavy metals are encapsulated, which glass particles and flue gases are passed to a cyclone which separates the flue gases from the solid particles.

2. Process according to Claim 1, characterized in that the thermal reactor is a circulating fluidized-bed reactor.

3. Process according to Claim 1 or 2, characterized in that the solid particles separated from the cyclone are recycled to the circulating fluidized-bed reactor and the thermal treatment and separation are repeated a number of times, and in that the solid particles are finally discharged to a depot.

4. Process according to Claim 1, 2 or 3, characterized in that cooling takes place at the outlet of the circulating fluidized-bed reactor.

5. System for carrying out the process according to any one of Claims 1 to 4 inclusive, characterized by a thermal circulating fluidized-bed reactor (40), means (41) for heating the contents of the circulating fluidized-bed reactor, a line (37) for supplying the particulate material to be treated to the circulating fluidized-bed reactor, a line (47) for discharging flue gases and material treated in the circulating fluidized-bed reactor, which line debouches into a cyclone (48) for separating flue gases and solid particles from one another, a line (49) for discharging flue gases from said cyclone, and a line (51) for removing solid particles from the cyclone.

6. System according to Claim 5, characterized in that the discharge line (51) of the cyclone has switching means (52) arranged therein in order to be able either to recycle solid particles to the circulating fluidized-bed reactor (40) or to discharge them to a storage unit (55).

7. System according to Claim 5 or 6, characterized in that the flue gas discharge line (49) is fitted with an electrostatic filter (50) and/or dust filters for intercepting small particles.

8. Process according to Claim 1, characterized in that the particulate material to be passed to the circulating fluidized-bed reactor is dried on a belt drier and the dried material is ground into powder and is passed to a buffer silo whose outlet communicates with the circulating fluidized-bed reactor via an air line.

9. Belt drier designed to dry particulate material in accordance with the process according to Claim 8, comprising an endless conveyor belt (70), means (8) for passing particulate material, for example in granular form, onto the conveyor, means (72 to 80 inclusive) for directing hot air across the top surface of the top part of the belt, and means (84) for conductively heating the top part of the belt from underneath by means of hot oil.

10. System according to Claim 9, characterized in that the means for directing hot air across the top surface of the top part of the drying belt consist of a number of units (72) which are positioned above the belt next to one another and are each formed by a fan (73), an air supply (79) connected to the intake of the fan, a pipe which is connected to the outlet of the fan and has a heat exchanger (74) for heating the air in the outlet, a blow-through element (75) for directing the heated air across the belt, a sink (76) for the air which has flowed across the belt, a condenser (12) which is connected to said sink and is in turn connected to said air supply (79).

11. System according to Claim 9 or 10, characterized in that the means for conductively heating the top part of the belt from underneath by means of hot oil consist of oil-filled contact boxes (84) which are disposed directly below the bottom surface of the top part and are connected to an oil supply and an oil discharge (81 and 82, respectively).

12. Process according to Claim 8, characterized in that the particulate material, prior to being dried on the belt drier, is mechanically dewatered to a dry substance content between 25 and 45 % by weight.
